# EUROPEAN PATENT SPECIFICATION

(11) **EP 4 091 723 B1**
(45) Date of publication and mention of the grant of the patent: **11.02.2026**
(21) Application number: 22172451.1
(22) Date of filing: 10.05.2022
(51) Int. Cl.: B05C 1/08, B05C 1/02

(54) **APPARATUS AND METHOD FOR APPLYING PAINT THROUGH ROLLER COATERS, PREFERABLY TO PHOTOVOLTAIC PANELS**
VORRICHTUNG UND VERFAHREN ZUM AUFTRAGEN VON FARBE DURCH WALZENBESCHICHTER, VORZUGSWEISE AUF PHOTOVOLTAISCHE PLATTEN
APPAREIL ET PROCÉDÉ D'APPLICATION DE PEINTURE À L'AIDE DE ROULEAUX, DE PRÉFÉRENCE SUR DES PANNEAUX PHOTOVOLTAÏQUES

(30) Priority: 20.05.2021 IT 202100013085
(43) Date of publication of application: 23.11.2022
(73) Proprietor: CEFLA SOCIETA' COOPERATIVA, 40026 Imola (BO) (IT)
(72) Inventor: FILIPPINI, FABRIZIO, IMOLA (IT)
(74) Representative: Karaghiosoff, Giorgio Alessandro

(56) References cited:
- CN-A- 106 423 711
- CN-A- 110 918 370
- CN-A- 112 275 531

## Description

The present invention relates to an apparatus and a method for applying paint through roller coaters to mainly flat panels. In particular, said apparatus provides for the replacement of the applying roller in said apparatus. In the case of solar (photovoltaic) panels said mainly flat panels are glass panes.

Mainly flat panels means panels wherein two of the three dimensions are bigger than the third dimension, by at least one order of magnitude. Typically, the measures of said glass panes are 600x600x1.5 mm to 2000x1400x3 mm.

Typically, an apparatus for applying paint on products using the roller technology is provided with a conveying system, on which panels to be painted are laying. The panels are brought near the application head, made of two rollers: a first chromed dosing roller and a second rubber applying roller. A pump withdraws paint from a tank, and paint is conveyed to a tank formed by said pair of rollers, which are pressurized.

The transposition of paint from the applying roller onto the panel occurs through pressure. The quantity of paint is adjusted through the variation of the pressure applied on the applying roller by the dosing roller. Advantageously, a load cell system can be used, measuring the thrust force of the dosing roller onto the applying roller.

In the art, using reading bars is known in order to detect the actual measures of said panels to be painted, in particular their thickness.

One of the documents of the known art is e.g. US9314811B1 of Enki Tech Inc. disclosing an apparatus for applying a sol-gel coating on solar panels. Said apparatus comprises an applying station for applying a coating through rollers, and a station for the jellification of the applied coating.

A further document of the known art is CN106423711A of Anhui Jixingyuan Tech CO LTD, which describes single-roller coating machine capable of being suitable for coating a non-planar plate. The single-roller coating machine comprises a coating machine base. A conveying device is arranged on the upper side of the coating machine base. The coating machine base on the lower side of the conveying device is provided with a main loop oil groove. Oil grooves are formed in the left side and the right side of the conveying device. A front side lifting device is installed on the side, with a feeding port on the conveying device. A rear side lifting device is installed on the side, with a discharging port of the conveying device. The upper end of the front side lifting device and the upper end of the rear side lifting device are provided with coating devices.

CN110918370A of Dongguan Bluesky Intelligent Equipment CO LTD describes an automatic treatment agent coating equipment. The automatic treatment agent coating equipment is characterized by at least two automatic treatment agent coating units, wherein the two automatic treatment agent coating units are arranged on a machine frame along the conveying direction of a shoe material conveying mechanism and are used alternately; each automatic treatment agent unit coating is provided with at least one coating mechanism correspondingly; a control device is connected with a dose adjusting driving mechanism arranged on each coating mechanism. When the equipment works, a transition roller is intermittently driven by the dose adjusting driving mechanism. The roller body in the treatment agent coating device can be quickly cleaned, replaced and installed so that coating can occur without interruptions.

CN112275531A of Foshan Shuntu Tech CO LTD discloses a panel coating machine. The coating machine comprises a rack; the rack is provided with a conveying belt used for conveying panels, a feeding mechanism used for providing paint for the coating mechanism, and a driving mechanism used to actuate the coating mechanism.

The apparatuses for painting solar panels on the market are affected by the recurring problem of replacing the applying roller. It is known that the application of paint on such panels requires a high precision of both the quantity and the uniformity of the applied paint layer.

To this aim, a special applying roller must be used, which is lined with a polyurethane elastomer, provided with a finely rectified surface, which is easily damaged. Therefore, the applying roller must be often replaced in order to work and produce with the indispensable quality. In addition to the normal wear, said applying roller enters into contact with the sharp edges of glass panes, which can easily damage it.

On the market there are provided apparatuses of this kind, but due to their built none of the existing apparatuses can allow a fast replacement of the applying roller without the removal of the covers needed to protect human operators from the dangerous contact with the different rotating mechanical parts. In fact, in order to accelerate maintenance times, during the replacement of the applying roller, many of the machines available on the market expose dangerous rotating mechanical parts in order to avoid the time-consuming removal of protective covers.

Aim of the present invention is providing an apparatus and a fast and cheap method for the replacing of applying rollers, allowing human operators to work safely on the roller coater.

This object is achieved by an apparatus and a method having the features of the independent claims. Advantageous embodiments and refinements are specified in claims dependent thereon.

The apparatus according to the present invention comprises an applying roller supported by suitable lifting systems, which roller can be lifted without touching any mechanical part and without the need for removing further covers. Said lifting must occur during downtimes, when the roller coater is not applying paint.

In the apparatus according to the present invention, the rotating systems are protected through protective and guarded covers, so that dangerous parts cannot be reached, with the exception of the adjusting organs needed for adjustments. A multifunctional Programmable Logic Controller (PLC) provided with a display allows to adjust and control all the working parameters.

As is clear from the dependent claims, the apparatus according to the present invention is provided with a cover that separates from the environment the applying roller on its vertical side oriented toward the pressing roller and optionally even for a portion of the top side of said applying roller. The distance between pressing roller and dosing roller is preferably bigger than the diameter of the applying roller, while the applying roller is mounted on rotating supports, having the ends protruding from the corresponding heads of a rotation shaft of said applying roller, said rotating support being provided with a disengaging opening of the respective end of the rotating shaft. Such opening can be opened and closed, for each rotating support there being provided a translation guide that is substantially horizontal, and preferably oriented along a plane that is slightly tilted downward. Said guide detaches in correspondence of said disengaging opening of the corresponding support. Each guide ends at a pre-defined distance from the corresponding rotating support with a translation end of stroke of the corresponding end of the rotation shaft of the applying roller. The position of said ends of stroke is chosen so that the applying roller can be acceded to from top through the grabbing organs of a lifting device, and the applying roller is placed, on one side, at a given distance from the pressing roller and, at the other side, from a top horizontal cover. The grabbing organs of the applying roller can be grabbing organs for the ends of the rotating shaft of the applying roller, like e.g. annular elements coupled with a lifting actuator of a lifting device.

A first advantage of the present invention consists in the fast replacement of the applying roller, while preserving the safety of human operators. Of course, the replacement must occur during downtimes: the fast replacement allows the shortening of said downtimes.

A second advantage of the present invention is linked to the fact that the roller coater works with a perfectly efficient applying roller, so that glass panes can be perfectly painted, preventing the production of nonconforming products.

Further advantages and properties of the present invention are disclosed in the following description, in which exemplary embodiments of the present invention are explained in detail on the basis of the drawings:
- Figure 1: Axonometric view of the apparatus with cover;
- Figure 2: Axonometric view of the apparatus, wherein a cover was removed, and applying roller in its working position;
- Figure 3: Lateral view of the apparatus, wherein a cover was removed, and applying roller in the extraction position;
- Figure 4: Lateral view of the apparatus without covers;
- Figure 5: Lateral view of the supporting system for rollers;
- Figure 6: Front view of the lifting system for the applying roller;
- Figure 7: Axonometric view of a detail of the supporting system for the applying roller;
- Figure 8: Axonometric view of the roller coater provided with a bridge device for measuring panels thickness;
- Figure 9: Axonometric view of the bridge device and a conveyor.

It is worth remembering that, although the present description refers to the painting of glass panes, the description can be applied to the painting of panels made of any kind of material.

It is also worth remembering that the roller coater indicated with the numeral 1 is generally a component of a more complex painting line, comprising other sundry (not shown) apparatuses placed upstream and downstream said roller coater 1. E.g., upstream said apparatus 1 there can be provided apparatuses for the pre-treatment of panels, while downstream there can be provided further apparatuses for applying further paint layers and/or ovens for drying/polymerizing the applied paint.

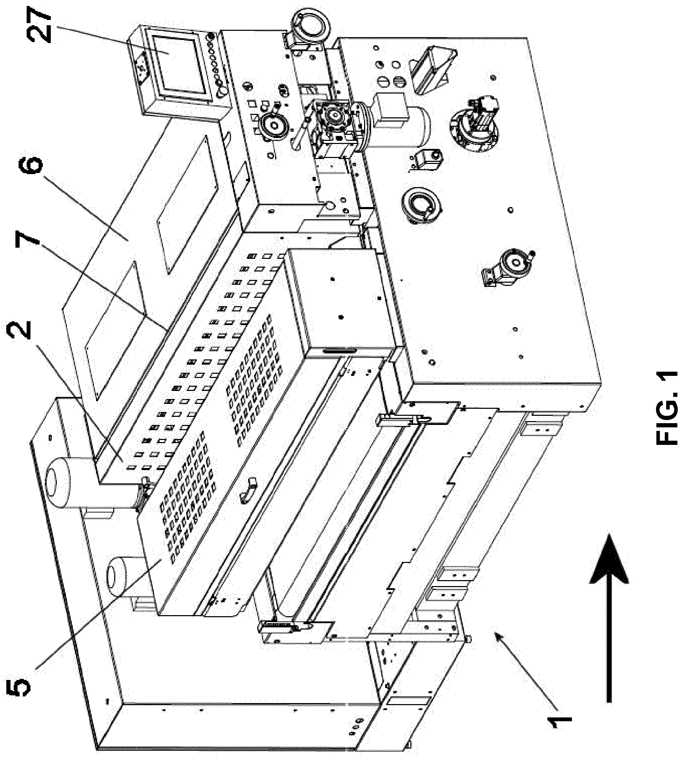

Figure 1 shows a roller coater 1 provided with the covers needed for its functioning without risk for human operators, as prescribed by the Machinery Directive 2006/42/CE. The bold arrow shows the conveying direction of the glass panes to be painted. In particular, the roller coater 1 is provided with a cover 2 that is to be removed in order to reach an applying roller 3. For safety reasons, the cover is screwed with two screws to said roller coater 1, screws that can be removed through an ordinary tool. Normally said roller coater 1 is provided with a PLC 27 having an interface that allows a human operator both to modify the set-up of the apparatus, and to detect the working parameters of said roller coater 1.

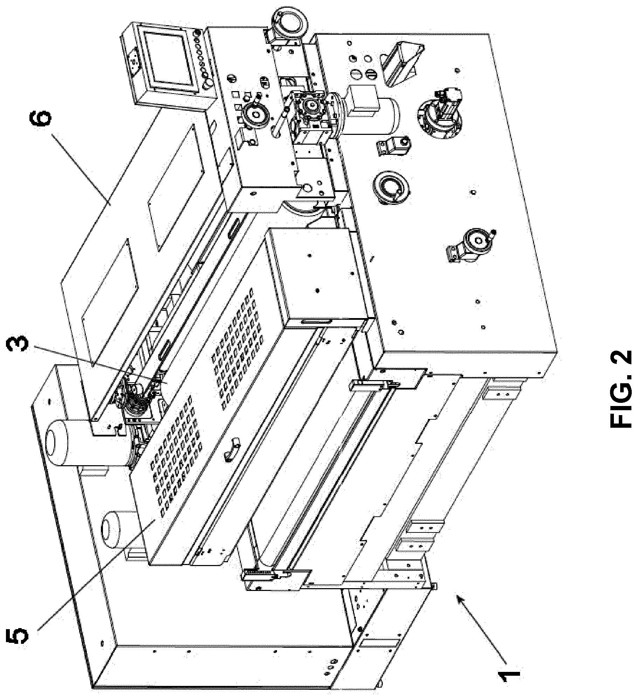

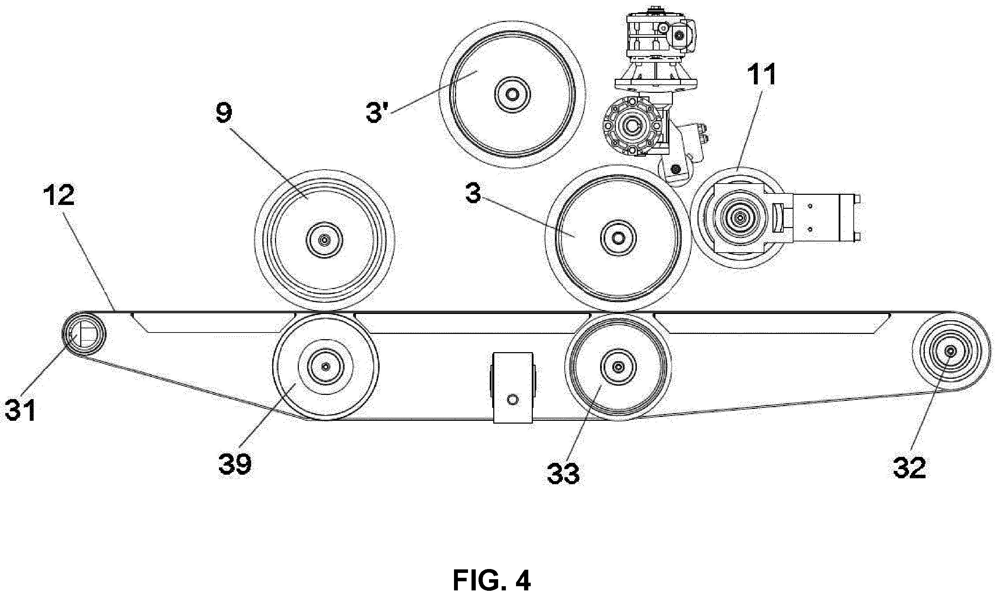

Figure 2 shows the roller coater 1, wherein said cover 2 was removed and the applying roller 3 in its working position. Said vertical cover 2 covers the applying roller 3. A horizontal cover 6 covers both the applying roller 3 and a dosing roller 11 (visible in Figure 4). Said applying roller 3 and said dosing roller 11 form an application head.

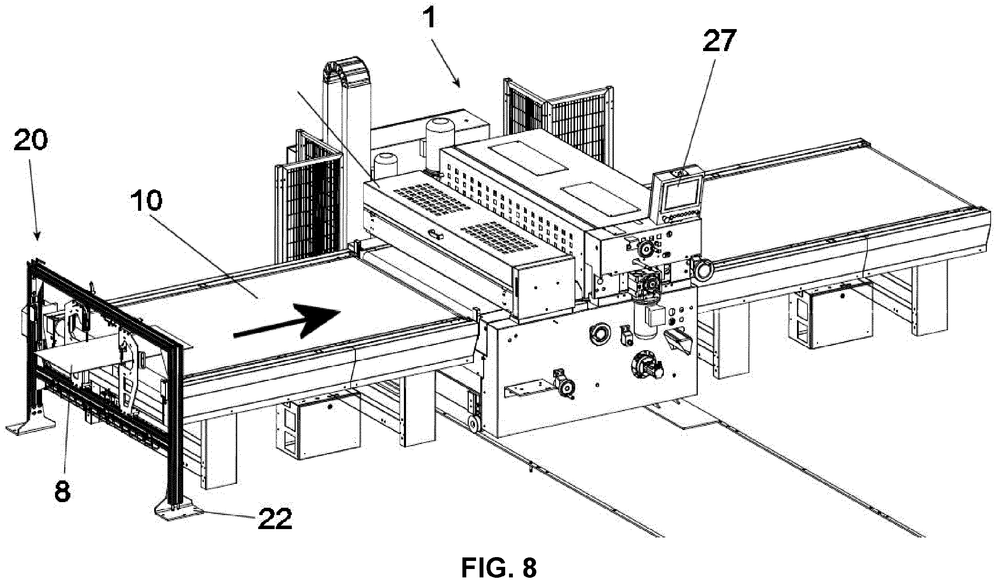

The dosing roller 11 rotates in the conveying direction of the glass pane 8 (visible in Figure 8). The applying roller 3 is a reverse roller, i.e. rotates in the opposite direction with respect to the conveying of the panes to be painted, and would tend to repel the glass pane, i.e. send it back to its place of origin.

In order to prevent this, in the art using a feed roller 9 is known (visible in Figure 4), which rotates according to the conveying direction of the panes, and therefore provides for the conveying of the glass pane 8. A further cover 5 covers said feed roller 9.

It is worth mentioning that the interaxis between said feed roller 9 and the applying roller 3 must be shorter than the minimum length of the shortest glass panel that can be coated in said roller coater. In this case, the distance is 600 mm.

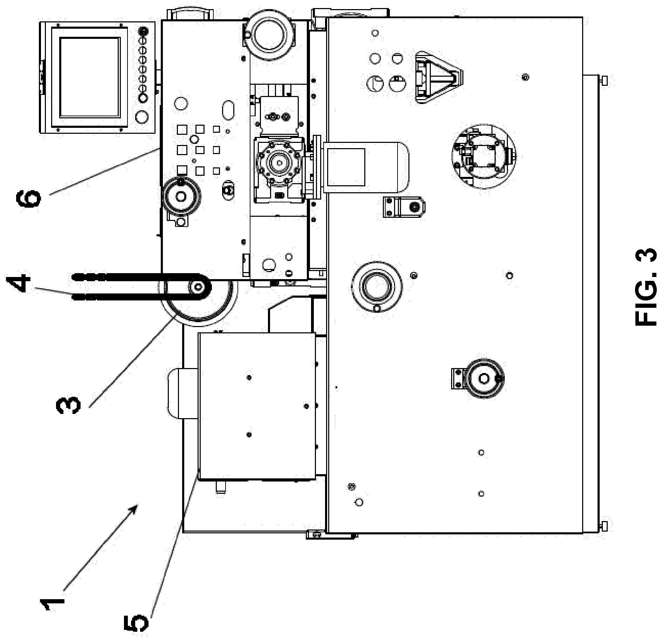

Figure 3 shows a lateral view of said roller coater 1, while said applying roller 3 is extracted through two straps 4, each placed at one of its two ends. Said straps 4 are part of a lifting member, suitable for the weight of said roller 3, which is around 200 kg. Said lifting member can be a bridge crane or a stacker, placed in a suitable point; the lifting member is independent from said roller coater 1. Said lifting member is used also for inserting a new applying roller 3 into said roller coater 1, in order to replace said worn/damaged roller 3. Obviously, the roller 3 can be replaced only when said roller coater is stopped (during downtimes).

The positions of the rollers and of the covers of the roller coater 1 must be such, that the applying roller 3 can be extracted without entering into contact with other mechanical parts of the coater 1.

The dosing roller 11 undergoes a markedly lesser wear with respect to the applying roller 3. When the dosing roller 11 must be replaced, the top cover 6 is removed, which opens like a door through a hinge 7 placed at the end of said cover 6 oriented to the entry of said panes.

Figure 4 shows a lateral view of the roller coater 1, wherein the covers 2, 5 and 6 were removed. Said removal allows to observe the feed roller 9, which in use is hidden by said cover 5, the applying roller 3 and the dosing roller 11, which together form the application head, in use hidden by said cover 6. For comparison, the roller indicated with the numeral 3' shows the position for the vertical extraction of said roller 3. In other words, the roller indicated with 3' is in the extraction position shown in Figure 3.

As customary in the art, the feed roller 9 rotates in the conveying direction of the glass panes, and is coupled to a contrast roller 39. The applying roller 3 is a reverse roller and rotates in the direction opposite to the conveying direction. The dosing roller 11 rotates in the conveying direction.

Figure 4 allows to observe also a closed belt conveyor 12, which is a component of the roller coater 1. Said conveyor 12 is rectified; as customary, the closed belt rotates around two rollers, the first of which is an idle roller 31, while the second roller is a motorized roller 32.

As explained, the applying roller 3 is a reverse roller, i.e. tends to repel the glass pane 8, therefore there must be provided said feed roller 9, which forces the pane across the applying roller 3 and the contrast roller 33. The contrast roller 33 can be moved in the conveying direction, so that when it is moved from the vertical position with respect to the applying roller 3, a too violent contact with the entry edge of the glass pane 8 is prevented.

The conveying belt 12 is rectified in order to prevent surface bulging, due e.g. to a vulcanized joint, so as to prevent thickness differences along the belt. In fact, said differences in thickness provoke a difference of pressure of the applying roller 3, and therefore a difference in the thickness of applied paint.

The feed roller 9 presses on the glass pane 8 with an interference of about 0.5 mm. The glass pane 8 is intercepted by a photocell at the entry of the roller coater 1, which accompanies it until said pane is held between said applying roller 3 and contrast roller 33, with an interference of 0.5 mm again. The feed roller lifts from the glass pane 8 and the pane is dragged by the belt, in order to prevent vibrations during paint application.

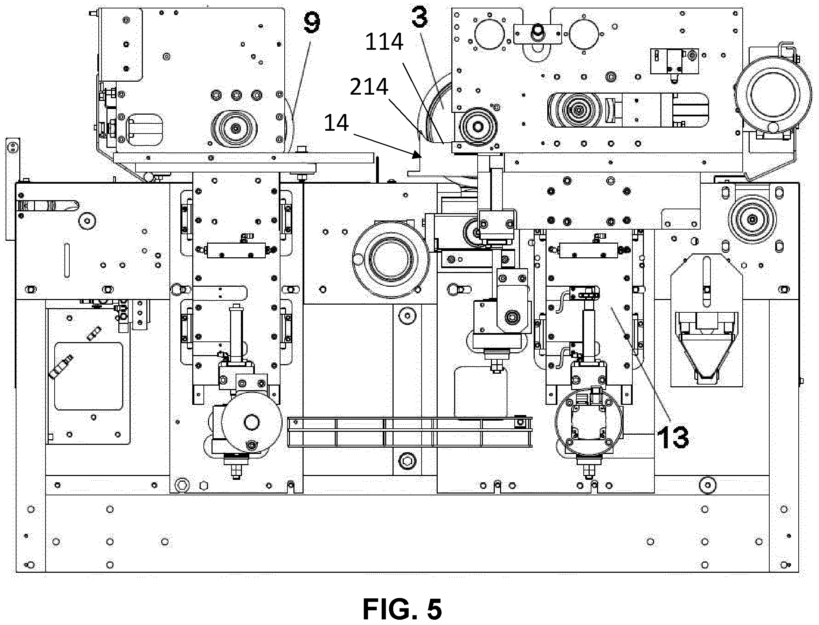

Figure 5 shows a lateral view wherein all the covers were removed, and the support systems of said rollers are shown. Said application head, comprising applying roller 3 and dosing roller 11, moves with respect to the conveying belt 12 through two independent systems 13 provided with ball recirculating runners, one system on the right side and one system on the left side. In this way, it can adjust to the actual dimensions of the thickness of the glass pane 8, which can be different on the two sides for some tenths of millimetre. The motorization is provided with brushless motors and encoder for the detection of position, with a centesimal precision.

The feed roller 9 is provided with a similar lifting system, but without independent adjustment to the thickness on its two sides.

As customary in roller coaters, the dosing of paint occurs through the pressure exerted by the dosing roller 11 on the applying roller 3; a stronger pressure decreases the quantity of applied paint. The speed of transport, too, affects the applied quantity in an unwanted way: in fact, a greater speed of the glass panes 8 generally causes an increase of the quantity of applied paint.

In roller coaters, typically the system for adjusting the quantity of applied paint occurs by varying the pressure applied to said dosing roller 11. On some roller coaters, the dosing roller rotates in reverse, i.e. opposite to the conveying direction, and this leads to a removing of paint from said roller, altering the adjustment of the dosing roller; both can influence the quantity of applied paint.

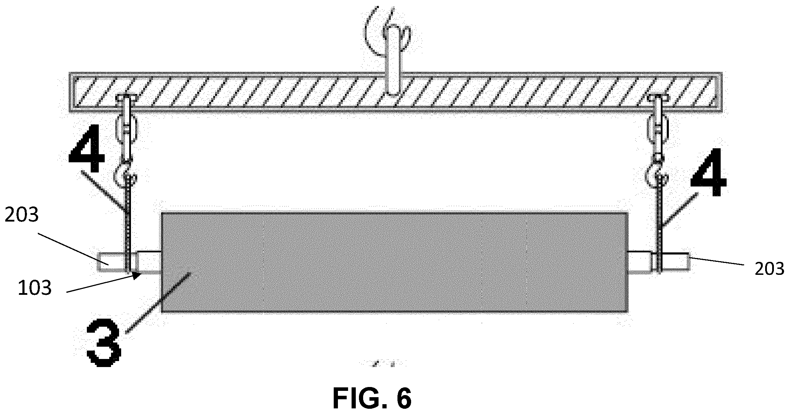

Figure 6 shows the lifting member of the applying roller 3 for its replacement. As already explained, said lifting member can be a bridge crane or a stacker suitably placed above said roller coater 1. The lifting member is independent from said roller coater 1.

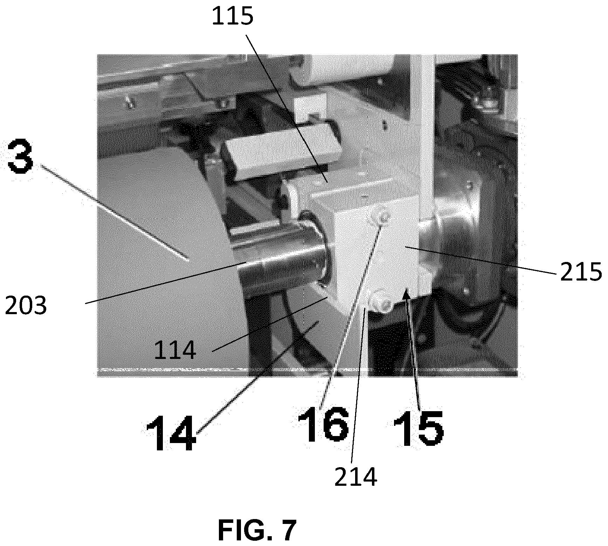

Figure 7 shows a detail of the support for the applying roller 3. When in its working position, said applying roller 3 is held by suitable supports 15 that fix the ball bearings on which the terminal ends 203 of the rotating shaft of the applying roller rotate. In the shown embodiment, said supports 15 are two semi-clamps 115 and 215 that are locked through bolts 16 or through a combination of studs and nuts or other locking means. Each semi-clamp 115, 215 is provided with an internal semi-circular annular surface, said semi-circular surface being divided on said two semi-clamps 115, 215 according to a vertical section plane and radial with respect to the shaft 103 and to the relative ends 203 protruding from the heads of the applying roller 3. When the applying roller 3 is replaced, said supports are opened, so separating said semi-clamps 115, 215, one of which, i.e. the one 115 oriented toward the pressing roller 9, is stationary, while the other 215 is removable. The applying roller 3 can leave and separate from said semi-clamp 115, and slides with its ends 203 on a corresponding guiding support provided on the roller coater 1 that defines a transferring path of the roller 3 and of its ends 203 in a position suitable for their grabbing through lifting means of said roller 3.

In particular, Figure 7 shows an embodiment wherein said supports are in the form of a supporting bracket 14 provided with a top side 114 for supporting the corresponding end 203 of the shaft 103 of the roller. Said surface is substantially horizontal, preferably slightly tilted downwards, starting from an end that is provided at a level such that the supporting surface 114 is at the level of the horizontal tangent of the bottom side of the semi-circular room engaging said semi-clamp 115. At the opposed end of each bracket, and in a position preferably coinciding with reference to the transversal axis of the machine parallel to the axis of roller/s 3 and/or 9 and/or 11, each bracket is provided with an end of stroke 214, which in the shown embodiment is in the form of a prominence or tooth protruding upwards of the surface 114. Such prominence or tooth has theaim to prevent the fall of the roller 3 beyond the end of said brackets 14 once its supports are removed and the roller has slided along them. The roller is so stopped in the position wherein the applying roller 3 is free at its top from constructive parts of the apparatus 1 and can be lifted from the brackets as above shown and described with reference to Figure 6.

The embodiment of Figures 5-7 is not limiting, but is only a preferred embodiment.

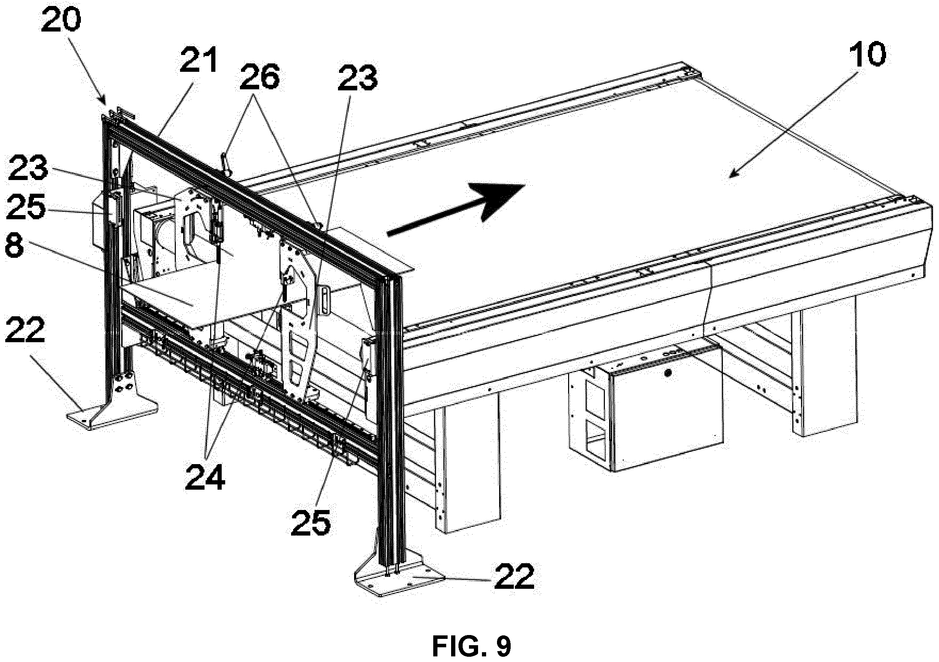

Figure 8 and Figure 9 show an embodiment which is not part of the present invention, in particular a bridge device 20 for measuring the thickness of glass panes 8. The two Figures show the preferred placement for the bridge device 20, i.e. upstream a closed belt conveying system 10 placed upstream said roller coater 1.

Figure 8 shows a glass pane 8 that is inserted into the roller coater 1 through a closed belt conveyor 10 placed upstream said roller coater 1. The bold arrow shows the conveying direction of the glass panes 8.

Upstream said closed belt conveyor 10 there is provided a bridge device 20 according to the second embodiment of the present invention. Said bridge device allows to measure the thickness of glass panes 8 during their conveyance through said bridge device, so that the data are sent in real time to the roller coater 1, which adapts to the transmitted measures.

Figure 9 shows an axonometric view of said bridge device 20, placed in proximity of the closed belt conveyor 10. The bold arrow shows the conveying direction of the glass panes 8.

Said bridge device 20 comprises:
- A frame 21 provide with feet 22 for fixing it to the floor, so that the bridge device 20 is independent and can be placed in the most suitable points of the painting line. In this way, bumps and/or vibrations generated by the movement of the rotating organs are prevented, which might affect the precision of measuring;
- Supports 23 supporting contact sensors; said supports can be slid in a direction which is perpendicular to the conveying direction of the panes 8 to be painted, in order to adapt their position to the transversal measure (width) of the glass pane 8;
- Contact sensors 24 (one for each side of the glass); said sensor 24 are divided into two parts, a top part and a bottom part with respect to the surface of the glass pane 8, and are both provided with a pneumatic cylinder, in its turn integral with an encoder detecting the displacement while leaning on the surface through an idle roller;
- Transversal photocells 25, detecting the position of the glass pane 8 and its length;
- Blocking knobs 26 for blocking said supports 23.

In fact, it is known that glass panes, especially when provided with a low thickness, are not provided with the same thickness on their right and left side, i.e. the sides parallel to the conveying direction of said panes 8. Said difference can be of some tenths of millimetre. As the application of paint on glasses, always destined to solar sector, is particularly delicate and requires an extreme precision, the working pressure of the applying roller 3 on the surface of the glass pane is very important for ensuring the uniformity of the paint layer.

Advantageously, the bridge device 20 is not a component of the roller coater 1 and is fixed to the floor, preventing problems due to vibrations of the roller coater 1 during measuring.

In this embodiment, although the bridge device 20 is independent from the roller coater 1, nonetheless there is provided a communication system between the bridge device 20 and the PLC 27 of the roller coater 1, allowing to transmit the actual thickness data of each pane 8 to the application head of the roller coater 1 in real time.

Thanks to the use of the bridge device 20, the transversal position of the application head in the direction of width can be adjusted to the actual shape of the pane to be painted, in order to adapt it to the thickness difference between the two sides of the pane, using the above explained system with ball recirculating runners and brushless motor.

In short, the measuring of the thickness of glass panes 8 and the consequent painting of the glass panes 8 occurs as follows:
a. The glass pane 8 conveyed in the painting line is intercepted by the photocells 25, activating the measuring sensors 24;
b. When the glass pane 8 detected by the photocells reaches the two sensors 24, said pneumatic cylinders bring said idle roller in contact with the top and bottom surfaces of the glass pane, and by value difference the actual thickness of the pane is measured;
c. The measure is transmitted to the PLC 27 of the roller coater 1, which manages the positioning of the application head;
d. Through two independent motorizations for positioning each of the two sides of the roller 3, said roller can be adjusted to the actual thickness of the glass pane, and with the working pressure optimal for a correct paint application on both sides;
e. When the photocells 25 detect the end of the glass pane, they send a signal to the measuring sensors 24, which deactivate.

The above description refers specifically to the use of said bridge device 20 for measuring the thickness of glass panes 8 inside a roller painting line for photovoltaic panels. The skilled person cannot miss the fact that any kind of mainly flat panel 8 can be painted in a line comprising the roller coater 1 according to the present invention, e.g. panels made of wood, plastics, fibrocement, etc. Similarly, the skilled person cannot miss the fact that the bridge device 20 according to the present invention can be used in a production line comprising machines of any type working in contact with a main surface of said panel 8, e.g. machines for cleaning said main surface, or sanding machines.
- 1: roller coater
- 2: cover
- 3: applying roller
- 4: strap
- 5: cover for the feed roller
- 6: cover
- 7: hinge
- 8: glass pane
- 9: feed roller
- 10: closed belt conveyor
- 11: dosing roller
- 12: rectified conveyor
- 13: ball recirculating runners system
- 14: bracket
- 15: support for the applying roller
- 16: screw
- 20: bridge device
- 21: frame
- 22: feet for fixing to floor
- 23: supports for measuring sensors
- 24: contact sensors
- 25: transversal photocell
- 26: blocking knob
- 27: PLC
- 31: idle roller
- 32: motorized roller
- 33: contrast roller
- 39: contrast roller
- 103: rotation shaft of the applying roller
- 203: end of the rotation shaft
- 114: top side of brackets
- 214: end of stroke
- 115: semi-clamp
- 215: semi-clamp

## Claims

1. Roller coater (1) for applying paint to mainly flat panels (8) provided with different lengths comprised between a minimum and a maximum length workable by said roller coater, comprising, in the direction of conveying of panels:
- a feed roller (9), preferably coupled to a contrast roller (39);
- an application head for applying paint, comprising an applying roller (3) and a dosing roller (11), said applying roller being preferably coupled to a contrast roller (33);
- a conveyor (12) for the panels (8) to be painted, preferably in the form of a closed belt conveyor;
wherein
- said feed roller (9) is covered by its own cover (5),
- said application head comprising said applying roller (3) and said dosing roller (11) being covered by a vertical cover (2) and a horizontal cover (6), which covers are removable,
- rotation supports (15) wherein a corresponding end of said applying roller is rotatably mounted, each of which supports can be coupled and decoupled from the corresponding end of the applying roller, the working position of the applying roller being corresponding to the coupled condition of its ends in the corresponding rotation support (15) and there being provided a withdrawing position,
- translation organs of said applying roller for withdrawing it along an L-shaped path;
- which L-shaped path provides an initial translation in a substantially horizontal direction for disengaging said applying roller and distancing it in a radial direction of the ends of the applying roller from the corresponding rotation support and in the direction of the feed roller (9) and a successive translation in a lifting vertical direction, i.e. distancing it from said conveyor (12), which translation organs comprise a substantially vertical guide of said applying roller and a lifting organ of said applying roller and removable coupling terminals placed at the ends of said applying roller,
- the interaxis distance between said feed roller (9) and said applying roller (3) being at least equal to the length of the path for the branch corresponding to said translation in a substantially horizontal direction of radial distancing of the ends of the applying roller (3) from the rotational supports (15), and shorter than the minimum length of the panels, and
- wherein said vertical cover (2) is provided on the side of the applying roller (3) oriented toward the feed roller (9), and optionally also toward the top side of said applying roller (3) for a given extension in its radial direction, while to said each rotation support (15) a substantially horizontal translation guide (14) is associated and in the direction of the feed roller (9), said substantially horizontal translation guide being provided with a pre-set length direction and with a stroke-end stop of the initial translation toward the feed roller of said applying roller, wherein said applying roller (3) takes a terminal position and wherein the lifting device of the applying roller (3) comprises two straps (4) coupleable each to one head end of said applying roller (3), which straps are fixed to a lifting organ of a bridge crane or a stacker for lifting said applying roller in the vertical direction, from said end of stroke position of the initial translation into the lifted position with respect to the initial translation.

2. Roller coater (1) for applying paint to mainly flat panels (8) according to claim 1, wherein said applying roller (3) comprises at its ends terminal sections of a supporting shaft, protruding from the heads of said roller, which terminal sections are fixable in said rotation supports (15) and wherein said rotation supports are in the form of locking clamps of the respective bearing on the respective terminal section of shaft, while said clamps are openable and closable against said bearings, being formed by at least two parts lockable to each other, and separable along a vertical plane as two semi-clamps separable along a radial, substantially vertical plane with reference to said shaft of the applying roller and lockable to each other.

3. Roller coater (1) for applying paint to mainly flat panels (8) according to claims lor 2, wherein said guides for the initial translation of the applying roller (3) toward the feed roller (9) are a couple of guiding brackets (14), each respectively associated to a head end of the applying roller, each of which is coinciding with the terminal section of shaft, which brackets are provided with a guiding top surface for the corresponding end of the applying roller, an end of stroke tooth at their end oriented toward the feed roller, which brackets are vertically coinciding at least with their initial end with the bottom tangential plane of the rotation support of the corresponding end of the applying roller, so that when said applying roller (3) is freed from the supports (15), said ends of the applying roller (3) glide out of the corresponding support and rotate and/or slide on said guiding top surface of said brackets.

4. Roller coater (1) for applying paint to mainly flat panels (8) according to claims 2 and 3, wherein the top surfaces of the guiding brackets (14) are coinciding with a plane tilted downwards with respect to the horizontal plane, and whose top end is at the level of the horizontal plane tangent to the bottom point of the annular housing formed by the semi-clamp opposed to the end of stroke provided on said bracket, so that said applying roller (3) automatically slides with its two ends of shaft in a direction opposite to the conveying directions of said panels (8), out of said semi-clamp and rotates toward the end of stroke of the two guiding brackets (14), being supported by said brackets (14).

5. Roller coater (1) for applying paint to mainly flat panels (8) according to claim 1, wherein said feed roller (9) and said dosing roller (11) rotate in the conveying direction of panels (8), while said applying roller (3) is a reverse roller, i.e. rotates in the direction opposite to the conveying direction of panels (8).

6. Roller coater (1) for applying paint to mainly flat panels (8) according to claim 1, wherein said roller coater (1) is provided with a PLC (27) adjusting the position of the application head for applying paint with respect to the position of the panel (8) and/or the conveying plane of said conveyor (12), according to the measurement of the actual thickness of the single panel (8) measured by a measuring system, said roller coater (1) being provided with a system for adjusting the position of the application head according to measurement of each panel.

7. Roller coater (1) for applying paint to mainly flat panels (8) according to claim 6, wherein said system for adjusting the positioning of the application head comprises two independent motorizations, one for the right side and one for the left side of said panel, managed by brushless motors and movements on ball recirculating runners, capable of reaching a centesimal precision in the positioning of the application head, said movements being provided for the mobile support of the application head with respect to the conveyor (12), perpendicularly to its conveying plane.

8. Roller coater (1) for applying paint to mainly flat panels (8) according to any of the preceding claims, wherein said panels are glass panes, preferably for the production of photovoltaic panels.

9. Method for roller coating mainly flat panels (8) making use of the roller coater (1) according to claims 1-8, **characterized by** the following steps:
a. Feeding a panel (8) in the painting line;
b. Measuring the thickness of each panel (8) through a measuring system;
c. Transmitting said measurement to the PLC (27) of said roller coater (1) managing the positioning of the application head;
d. Adjusting, through two independent motoring, the positioning of each side of the application head according to the actual thickness value for each measured panel (8).

## Patentansprüche

1. Walzenbeschichter (1) zum Auftragen von Anstrichmittel auf vorwiegend flache Platten (8), die mit unterschiedlichen Längen zwischen einer vom Walzenbeschichter bearbeitbaren Minimallänge und einer Maximallänge versehen sind, umfassend in Förderrichtung der Platten:
- eine Zuführwalze (9), vorzugsweise mit einer Kontrastwalze (39) gekoppelt;
- einen Auftragskopf zum Auftragen des Anstrichmittels, umfassend eine Auftragswalze (3) und eine Dosierwalze (11), wobei die Auftragswalze vorzugsweise mit einer Kontrastwalze (33) gekoppelt ist;
- einen Förderer (12) für die zu beschichtenden Platten (8), vorzugsweise in Form eines geschlossenen Bandförderers;
wobei
- die Zuführwalze (9) durch eine eigene Abdeckung (5) abgedeckt ist,
- der Auftragskopf, der die Auftragswalze (3) und die Dosierwalze (11) umfasst, durch eine vertikale Abdeckung (2) und eine horizontale Abdeckung (6) abgedeckt ist, wobei diese Abdeckungen abnehmbar sind,
- Drehlager (15), in denen ein entsprechendes Ende der Auftragswalze drehbar gelagert ist, wobei jedes dieser Lager mit dem entsprechenden Ende der Auftragswalze gekoppelt und von diesem entkoppelt werden kann, wobei die Arbeitsposition der Auftragswalze dem gekoppelten Zustand ihrer Enden in dem entsprechenden Drehlager (15) entspricht und wobei eine Entnahmeposition vorgesehen ist,
- Verfahrorgane der Auftragswalze zum Zurückziehen derselben entlang einer L-förmigen Bahn;
- welche L-förmige Bahn eine anfängliche Verfahrbewegung in einer im Wesentlichen horizontalen Richtung vorsieht, zum Lösen der Auftragswalze und zum Entfernen derselben in einer radialen Richtung der Enden der Auftragswalze von dem entsprechenden Drehlager und in Richtung der Zuführwalze (9) und eine anschließende Verfahrbewegung in einer vertikalen Hubrichtung, d. h. zur Entfernung derselben von dem Förderer (12), welche Übersetzungsorgane eine im Wesentlichen vertikale Führung der Auftragswalze und ein Hebeorgan der Auftragswalze sowie lösbare Kupplungsanschlüsse an den Enden der Auftragswalze umfassen,
- wobei der Achsabstand zwischen der Zuführwalze (9) und der Auftragswalze (3) zumindest der Länge des Bahnabschnitts gleich ist, der der Verfahrbewegung in einer im Wesentlichen horizontalen Entfernungsrichtung der Enden der Auftragswalze (3) von den Drehlagern (15) entspricht, und kürzer ist als die Minimalänge der Platten, und
- wobei die vertikale Abdeckung (2) an der der Zuführwalze (9) zugewandten Seite der Auftragswalze (3) und optional auch an der Oberseite der Auftragswalze (3) für eine gegebene Ausdehnung in ihrer Radialrichtung vorgesehen ist, während jedem Drehlager (15) eine im Wesentlichen horizontale Verfahrführung (14) zugeordnet ist, und in Richtung der Zuführwalze (9) die im Wesentlichen horizontale Verfahrführung mit einer voreingestellten Längsrichtung und einem Hubendanschlag für die anfängliche Verfahrbewegung in Richtung der Zuführwalze der Auftragswalze versehen ist, wobei die Auftragswalze (3) eine Endposition einnimmt und wobei die Hebevorrichtung der Auftragswalze (3) zwei Riemen (4) umfasst, die jeweils mit einem Kopfende der Auftragswalze (3) gekoppelt werden können, wobei die Riemen an einem Huborgan eines Brückenkrans oder eines Staplers befestigt sind, um die Auftragswalze in vertikaler Richtung von der Endhubposition der anfänglichen Verfahrbewegung in die angehobene Position in Bezug auf die anfängliche Verfahrbewegung anzuheben.

2. Walzenbeschichter (1) zum Auftragen von Anstrichmittel auf vorwiegend flache Platten (8) gemäß Anspruch 1, wobei die Auftragswalze (3) an ihren Enden Endanschlussabschnitte einer Stützwelle aufweist, die aus den Köpfen der Walze herausragen, wobei die Endabschnitte in den Drehlagern (15) fixierbar sind und wobei die Drehlager die Form von Verriegelungsklemmen des jeweiligen Lagers am jeweiligen Endabschnitt der Welle aufweisen, während die Klemmen gegen die Lager geöffnet und geschlossen werden können und aus mindestens zwei miteinander verriegelbaren Teilen bestehen, und entlang einer vertikalen Ebene als zwei Halbklemmen trennbar sind, die entlang einer radialen, im Wesentlichen vertikalen Ebene in Bezug auf die Welle der Auftragswalze trennbar und miteinander verriegelbar sind.

3. Walzenbeschichter (1) zum Auftragen von Anstrichmittel auf vorwiegend flache Platten (8) gemäß Anspruch 1 oder 2, wobei die Führungen für die anfängliche Verfahrbewegung der Auftragswalze (3) in Richtung der Zuführwalze (9) ein Paar Führungskonsolen (14) sind, die jeweils einem Kopfende der Auftragswalze zugeordnet sind, das jeweils mit dem Endabschnitt der Welle zusammenfällt, wobei die Konsolen mit einer Führungsoberseite für das entsprechende Ende der Auftragswalze und einem Hubendzahn an ihrem der Zuführwalze zugewandten Ende versehen sind, wobei die Konsolen zumindest mit ihrem Anfangsende vertikal mit der unteren Tangentialebene des Drehlagers des entsprechenden Endes der Auftragswalze zusammenfallen, so dass, wenn die Auftragswalze (3) von den Lagern (15) gelöst wird, die Enden der Auftragswalze (3) aus dem entsprechenden Lager herausgleiten und auf der Führungsoberseite der Konsolen rotieren und/oder gleiten.

4. Walzenbeschichter (1) zum Auftragen von Anstrichmittel auf vorwiegend flache Platten (8) gemäß den Ansprüchen 2 und 3, wobei die Oberseiten der Führungskonsolen (14) mit einer gegenüber der horizontalen Ebene nach unten geneigten Ebene zusammenfallen, deren oberes Ende sich auf Höhe der horizontalen Ebene befindet, die den unteren Punkt des ringförmigen Gehäuses tangiert, das durch die dem Hubende gegenüberliegende Halbklemme gebildet wird, die an der genannten Konsole vorgesehen ist, sodass die Auftragswalze (3) mit ihren beiden Wellenenden automatisch in einer Richtung entgegen der Förderrichtung der Platten (8) aus der Halbklemme herausgleitet und sich in Richtung des Hubendes der beiden Führungskonsolen (14) dreht, während sie von den Konsolen (14) gestützt wird.

5. Walzenbeschichter (1) zum Auftragen von Anstrichmittel auf vorwiegend flache Platten (8) gemäß Anspruch 1, wobei die Zuführwalze (9) und die Dosierwalze (11) in Förderrichtung der Platten (8) rotieren, während die Auftragswalze (3) eine Gegenlaufwalze ist, d. h. in entgegengesetzter Richtung zur Förderrichtung der Platten (8) rotiert.

6. Walzenbeschichter (1) zum Auftragen von Anstrichmittel auf vorwiegend flache Platten (8) gemäß Anspruch 1, wobei der Walzenbeschichter (1) mit einer SPS (27) versehen ist, die die Position des Auftragskopfes zum Auftragen von Anstrichmittel in Bezug auf die Position der Platte (8) und/oder die Förderebene des Förderers (12) justiert, entsprechend der Messung der durch ein Messsystem gemessenen tatsächlichen Dicke der einzelnen Platte (8), wobei der Walzenbeschichter (1) mit einem System zum Justieren der Position des Auftragskopfes entsprechend der Messung jeder Platte versehen ist.

7. Walzenbeschichter (1) zum Auftragen von Anstrichmittel auf vorwiegend flache Platten (8) gemäß Anspruch 6, wobei das System zum Justieren der Positionierung des Auftragskopfes zwei unabhängige Antriebe umfasst, einen für die rechte Seite und einen für die linke Seite der Platte, die von bürstenlosen Motoren und Bewegungen auf Kugelumlaufschienen gesteuert werden, die eine hundertstelgenaue Positionierung des Auftragskopfes erreichen können, wobei die Bewegungen für die bewegliche Lagerung des Auftragskopfes bezüglich des Förderers (12) senkrecht zu seiner Förderebene vorgesehen sind.

8. Walzenbeschichter (1) zum Auftragen von Anstrichmittel auf vorwiegend flache Platten (8) gemäß einem der vorstehenden Ansprüche, wobei die Platten Glasscheiben sind, vorzugsweise zur Herstellung von photovoltaischen Platten.

9. Verfahren zum Walzenbeschichten von vorwiegend flachen Platten (8) unter Verwendung des Walzenbeschichters (1) gemäß den Ansprüchen 1 bis 8, **gekennzeichnet durch** folgende Schritte:
a. Zuführen einer Platte (8) in die Lackierlinie;
b. Messen der Dicke jeder Platte (8) durch ein Messsystem;
c. Senden der Messung an die SPS (27) des Walzenbeschichters (1), die die Positionierung des Auftragskopfes steuert;
d. Justieren der Positionierung jeder Seite des Auftragskopfes durch zwei unabhängige Antriebe entsprechend dem tatsächlichen Dickenwert für jede gemessene Platte (8).

## Revendications

1. Vernisseuse à rouleau (1) pour appliquer de la peinture sur des panneaux (8) principalement plats de différentes longueurs comprises entre une longueur minimale et une longueur maximale utilisables par ladite vernisseuse à rouleau, comprenant, dans la direction d'acheminement des panneaux:
- un rouleau d'alimentation (9), notamment couplé à un rouleau de contraste (39);
- une tête d'application pour appliquer de la peinture, comprenant un rouleau d'application (3) et un rouleau de dosage (11), ledit rouleau d'application étant de préférence couplé à un rouleau de contraste (33);
- un convoyeur (12) pour les panneaux (8) à peindre, notamment sous la forme d'un convoyeur à bande fermé;
dans lequel
- ledit rouleau d'alimentation (9) est recouvert de son propre couvercle (5),
- ladite tête d'application comprenant ledit rouleau d'application (3) et ledit rouleau de dosage (11) étant recouvert par un couvercle vertical (2) et un couvercle horizontal (6), lesquels couvercles sont amovibles, - ledit rouleau d'application étant monté de manière rotative sur des supports de rotation (15) placés en correspondance de celui-ci, chacun de ces supports peut être couplé et découplé de l'extrémité correspondante du rouleau d'application, la position de travail du rouleau d'application correspondant à la condition couplée de ses extrémités dans le support de rotation correspondant (15) et une position de retrait étant prévue,
- des membres de translation dudit rouleau d'application pour son retrait le long d'une trajectoire en forme de L;
- laquelle trajectoire en forme de L assure une translation initiale dans une direction sensiblement horizontale pour désengager ledit rouleau d'application et l'éloigner dans une direction radiale des extrémités du rouleau d'application du support de rotation correspondant et dans la direction du rouleau d'alimentation (9) et une translation successive dans une direction verticale de levage, c.à.d. en l'éloignant dudit convoyeur (12), lesquels membres de translations comprennent un guide sensiblement vertical dudit rouleau d'application et un membre de levage dudit rouleau d'application et des bornes de couplage amovibles placées en correspondance des extrémités dudit rouleau d'application,
- la distance interaxiale entre ledit rouleau d'alimentation (9) et ledit rouleau d'application (3) étant au moins égale à la longueur du parcours pour la branche correspondant à ladite translation dans une direction sensiblement horizontale de l'éloignement radial des extrémités du rouleau d'application (3) par rapport aux supports de rotation (15), et inférieure à la longueur minimale des panneaux, et
- dans lequel ledit couvercle vertical (2) est prévu du côté du rouleau d'application (3) orienté vers le rouleau d'alimentation (9), et éventuellement aussi vers le côté supérieur dudit rouleau d'application (3) le long d'une extension donnée dans sa direction radiale, tandis qu'à chaque support de rotation (15) est associé un guide de translation sensiblement horizontal (14) dans la direction du rouleau d'alimentation (9), ledit guide de translation sensiblement horizontal étant muni d'une direction de longueur prédéterminée et d'une butée de fin de course de la translation initiale vers le rouleau d'alimentation dudit rouleau d'application, dans lequel ledit rouleau d'application (3) assume une position terminale et dans lequel le dispositif de levage du rouleau d'application (3) comprend deux sangles (4) pouvant chacune être couplée à une extrémité de tête dudit rouleau d'application (3), lesquelles sangles sont fixées à un membre de levage d'un pont roulant ou à un charriot élévateur pour lever ledit rouleau d'application dans la direction verticale, à partir de ladite position de butée de fin de course de la translation initiale dans la position levée par rapport à la translation initiale.

2. Vernisseuse à rouleau (1) pour appliquer de la peinture sur des panneaux (8) principalement plats selon la revendication 1, dans lequel ledit rouleau d'application (3) comprend, en correspondance de ses extrémités, des sections terminales d'un arbre de support faisant saillie des têtes dudit rouleau, lesquelles sections terminales peuvent être fixées dans lesdits supports de rotation (15), et dans lequel lesdits supports de rotation sont sous la forme de pinces de verrouillage du palier respectif sur la section terminale respective de l'arbre, tandis que lesdites pinces peuvent être ouvertes et fermées contre lesdits paliers, étant formées par au moins deux parties pouvant être verrouillées l'une à l'autre et séparées le long d'un plan vertical, comme deux demi-pinces pouvant être séparées le long d'un plan radial sensiblement vertical par rapport audit arbre du rouleau d'application et verrouillées l'une à l'autre.

3. Vernisseuse à rouleau (1) pour appliquer de la peinture sur des panneaux (8) principalement plats selon la revendication 1 ou 2, dans lequel lesdits guides pour la translation initiale du rouleau d'application (3) vers le rouleau d'alimentation (9) sont une paire de fixations de guidage (14), chacune respectivement associée à une extrémité de tête du rouleau d'application, chacun coïncidant avec la section terminale de l'arbre, lesquelles fixations sont prévues avec une surface supérieure de guidage pour l'extrémité correspondante du rouleau d'application, une dent de fin de course à leur extrémité orientée vers le rouleau d'alimentation, lesquelles fixations sont coïncidantes verticalement au moins avec leur extrémité initiale avec le plan tangentiel inférieur du support de rotation de l'extrémité correspondante du rouleau d'application, de sorte que, lorsque ledit rouleau d'application (3) est libéré des supports (15), lesdites extrémités du rouleau d'application (3) glissent hors du support correspondant et tournent et/ou glissent sur ladite surface supérieure de guidage desdites fixations.

4. Vernisseuse à rouleau (1) pour appliquer de la peinture sur des panneaux (8) principalement plats selon les revendications 2 et 3, dans lequel les surfaces supérieures des fixations de guidage (14) sont coïncidentes avec un plan incliné vers le bas par rapport au plan horizontal, et dont l'extrémité supérieure est au niveau du plan horizontal tangent au point inférieur du logement annulaire formé par la demi-pince opposée au fin de course prévu sur ladite fixation, de sorte que ledit rouleau d'application (3) glisse automatiquement avec ses deux extrémités d'arbre dans une direction opposée à la direction d'acheminement desdits panneaux (8), hors de ladite demi-pince, et tourne vers la fin de course des deux fixations de guidage (14), étant supporté par lesdites fixations (14).

5. Vernisseuse à rouleau (1) pour appliquer de la peinture sur des panneaux (8) principalement plats selon la revendication 1, dans lequel ledit rouleau d'alimentation (9) et ledit rouleau de dosage (11) tournent dans la direction d'acheminement des panneaux (8), tandis que ledit rouleau d'application (3) est un rouleau inversé, c.à.d. tourne dans la direction opposée à la direction d'acheminement des panneaux (8).

6. Vernisseuse à rouleau (1) pour appliquer de la peinture sur des panneaux (8) principalement plats selon la revendication 1, dans lequel ledit vernisseuse à rouleau (1) est muni d'un PLC (27) ajustant la position de la tête d'application pour appliquer de la peinture par rapport à la position du panneau (8) et/ou au plan d'acheminement dudit convoyeur (12), selon la mesure de l'épaisseur réelle du panneau (8) individuel mesuré par un système de mesure, ledit vernisseuse à rouleau (1) étant muni d'un système pour ajuster la position de la tête d'application selon la mesure de chaque panneau.

7. Vernisseuse à rouleau (1) pour appliquer de la peinture sur des panneaux (8) principalement plats selon la revendication 6, dans lequel ledit système pour ajuster la position de la tête d'application comprend deux motorisations indépendantes, une pour le côté droit et l'autre pour le côté gauche dudit panneau, gérés par des moteurs sans balais et des mouvement sur des patins à recirculation de billes, capables d'atteindre une précision centésimale dans le positionnement de la tête d'application, lesdits mouvements étant prévus pour le support mobile de la tête d'application par rapport au convoyeur (12), perpendiculairement à son plan d'acheminement.

8. Vernisseuse à rouleau (1) pour appliquer de la peinture sur des panneaux (8) principalement plats selon l'une quelconque des revendications précédentes, dans lequel lesdits panneaux sont des panneaux en verre, notamment pour la production de panneaux photovoltaïques.

9. Méthode de revêtement au rouleau de panneaux (8) principalement plats en utilisant la vernisseuse à rouleau (1) selon les revendications 1-8, **caractérisée par** les étapes suivantes:
a. Alimenter un panneau (8) sur la ligne de peinture;
b. Mesurer l'épaisseur de chaque panneau (8) à travers un système de mesure;
c. Transmettre ladite mesure au PLC (27) dudit vernisseuse à rouleau (1) gérant le positionnement de la tête d'application;
d. Ajuster, à travers deux motorisations indépendantes, la position de chaque côté de la tête d'application selon la valeur de l'épaisseur réelle de chaque panneau (8) mesuré.
